# EUROPEAN PATENT APPLICATION

(11) **EP 4 752 665 A1**
(43) Date of publication of application: **03.06.2026**
(21) Application number: 24215989.5
(22) Date of filing: 28.11.2024
(51) Int. Cl.: G05D 1/43, G05D 1/648, G05D 1/689, G05D 105/80, G05D 107/20, G05D 109/25

(54) **A METHOD FOR FLYING AN AERIAL DRONE AND A SYSTEM FOR EMPLOYING SUCH METHOD FOR CAPTURING IMAGE DATA**

(71) Applicant: Drönarstation AB, 566 34 Habo (SE)
(72) Inventor: Olofsson, Jim, 566 34 Habo (SE); Olofsson, Joel, 333 75 Reftele (SE)
(74) Representative: AWA Sweden AB

(57) **Abstract**

A method for flying an aerial drone (200) for capturing image data. The method comprises retrieving (S501) an area of interest (20) to be imaged; calculating (S502) a spiral trajectory (601, 701); initiating (S503) the aerial drone (200) flight, controlling (S504) the aerial drone (200) along the spiral trajectory (601, 701) so that the aerial drone (200) flies with a continuous curved flight trajectory. Further the method involves capturing (S505) a plurality of images (602, 702) along the spiral trajectory (601, 701) and initiating (S506) a return flight to the starting position (603, 703) by flying radially inwards (604, 704) to the starting position (603, 703), so as to fly the shortest distance to the starting position (603, 703) when initiating the return flight. The disclosure also comprises an alternative method, flying along the spiral trajectory inwards, as well as a drone system configured to operate according to the methods.

## Description

### Technical field

The present description relates to a method for flying a drone in a spiral trajectory and a system for evaluating an area of interest.

### Background

Forests are a crucial part of our ecosystem. In them many tree species vital for our livelihood are situated and forest management is important to inspect their health and productivity in order to take the appropriate measures to circumvent any potential threats. The most commonly employed methods to perform forest management are forest thinning and pruning to remove a fraction of the trees. Thinning of forests aids to attract new wildlife species and ameliorate biodiversity. All these measures require the physical presence of a person or group of people to inspect the forest, determine the parts of the forest that need intervention and then take action. Such a process is in general time consuming as forest owners can own forest terrain that spans tens of hectares and inspecting every tree species is not feasible. Current state of the art methods employs forest management utilizing drones and gathering image data; however one limiting factor when gathering image data from an area of interest such as a forest, is the battery capacity, since it limits the area to be covered. Therefore, there is a need for an improved method and system for capturing image data of an area of interest.

### Summary

An objective of the present description is to provide a method and a system that at least alleviates the above-mentioned problems.

The most obvious way of enlarging the area that can covered in a single flight would be to provide the drone with a battery having a larger capacity. However, this would directly affect the weight of the drone. Thus, for lightweight drones this is not a viable option.

The inventive concept is based on the inventor's realization that there is a need to improve the flight capacity of drones for capturing image data of an area of interest and that it can be achieved without increasing the battery capacity. This is especially useful for lightweight drones, that does not require licensed drone pilots. The method for capturing image data of the area of interest may allow remote accessibility to the gathered data. The inventors have further realized that such system may be of advantage for many different areas of interest, not only forest. It may be of advantage within construction, farming or any other land inventory application.

According to an aspect, a method for flying an aerial drone for capturing image data is provided. The method comprises: retrieving an area of interest to be imaged; calculating a spiral trajectory within the area of interest; initiating the aerial drone flight along the spiral trajectory from a starting position being inside said calculated spiral trajectory; controlling the aerial drone along the spiral trajectory so that the aerial drone flies with a continuous curved flight trajectory; capturing a plurality of images of the area of interest using an imaging sensor on the aerial drone along the spiral trajectory; initiating a return flight to the starting position by flying radially inwards to the starting position, so as to fly the shortest distance to the starting position when initiating the return flight.

By means of the present inventive concept an improved method to image an area of interest as defined above, is provided. The method introduces a flying trajectory for an aerial drone which improves the acquisition time to capture image data. By being able to acquire image data of the area of interest at a reduced time, a user may significantly improve the efficiency of operating an aerial drone without having to increase the battery capacity. This is achieved by avoiding corners or sharp turns. Sharp turns mean both that the aerial drone has to break and change direction which wastes energy, but also, a sharp turn reduces the area coverage as compared to flying in a helical. When flying in a helical/spiral, the aerial drone may always cover new ground in each movement.

The aerial drone, being configured to fly in a spiral trajectory, further gives another advantage, namely that the distance to the starting position is always reachable through flying in a straight line from the outermost position.

The intended area of interest can be various. In the context of this invention, an area of interest may be, e.g. a forest, construction sites, excavation sites, shoreline or a dock. In particular, the total area to be inspected may be left to the user to be defined.

Within the context of this disclosure, the wording "aerial drone" should be understood as an unmanned aerial vehicle. The aerial drone may weigh 1 kg or less. Preferably, the aerial drone may weigh below 500 g. Most preferably, the aerial drone may weigh below 250 g. The aerial drone may be a quadcopter drone.

The aerial drone may be configured to receive information from an external device. The information may be the size and/or location of the area of interest. The information may further include the nature of the area of interest, such as whether the area of interest is a forest, construction site, excavation sites, shoreline or a dock.

The area of interest may be presented as an orthographic map. The orthographic map may be used as a reference to calculate the spiral trajectory of the area of interest.

The calculation of the spiral trajectory may be performed within the external device. The spiral trajectory may afterwards be transmitted to the aerial drone.

The calculation of the spiral may alternatively be performed by the aerial drone.

A user may access and/or amend parameters related to the spiral trajectory. One possible parameter may be the quantity of spiral arcs/circles needed to encompass the entirety of the area of interest, another one may be the flight height which, if increased may reduce the number of spiral circles needed to cover the area of interest. Another parameter may be flight speed, or the form of the spiral, e.g. being wider than it is long, or the other way around.

The aerial drone may receive instructions from the external device to initiate the flight. The user may manually carry the aerial drone to the area of interest and/or position the aerial drone at the starting position. Alternatively or additionally, the aerial drone may be stored within a charging station located inside of the area of interest. The aerial drone may be stored in the starting position, or close to the starting position. Alternatively or additionally, the aerial drone may be initiated and subsequently fly to the starting position if initiated at a position being remote to the starting position.

The aerial drone may follow the spiral trajectory along a continuous curved path. This path may provide faster coverage of the area of interest compared to a spiral path formed by discontinuous steps wherein the aerial drone takes a sharp 90 degrees turn to progress into the subsequent segment of the spiral.

While flying on the spiral trajectory, the aerial drone may capture a plurality of images to map the area of interest. The images are captured by an imaging sensor on the aerial drone. The imaging sensor on the aerial drone may form part of a camera system. The camera system may further comprise optical elements, such as a lens or system of lenses. The lens or system of lenses may gather the light and focus it to the imaging sensor. The imaging sensor may be a coupled charge device (CCD) or a complementary metal-oxide-semiconductor (CMOS) sensor. The imaging sensor may be configured to interpret visible light, resulting in an output of an optical image. The imaging sensor may be configured to interpret infrared light, resulting in a heat map image. The system of lenses may be configured to change the magnification prior to capturing an image. The magnification of the system of lenses may be coupled to react according to the parameters of the spiral trajectory. The value of magnification of the system of lenses may be proportional to the quantity of spiral arcs. Herby, by increasing the coverage of each photograph, ie. low magnification, the number of arcs needed to cover an area of interest may be reduced, since more coverage is achieved in each arc.

In one embodiment, the control of the aerial drone along the calculated spiral trajectory is conducted with the aerial drone in a constant compass direction orientation. The orientation of the aerial drone may be such that the front or nose of the aerial drone faces towards a fixed direction, such as north.

In this instance, the yaw of the aerial drone remains constant during the flight.

In one embodiment, the control of the aerial drone along the calculated spiral trajectory is conducted with the aerial drone always oriented to fly with a short side of the plurality of images captured facing the center of the spiral. This may also correspond to the center of the area of interest. The aerial drone may maintain such orientation by changing the value of the yaw continuously as moving along the spiral trajectory. Hereby, the maximum new coverage for each movement forward will be achieved, since the long side of each plurality of image will face forward in the flight direction.

In the context of this application, the "short side" should be interpreted as the two sides in a rectangular photo being shorter than the "long side". That is, in landscape orientation, the short side will be the vertical right and left sides, and the long sides will be the horizontal top and bottom side.

In one embodiment, the return flight is initiated at a circumferential position allowing the aerial drone to fly with the wind towards the starting position. Hereby, flight efficiency may be increased further.

According to one embodiment, the method further comprises the step of, in real-time during the flight, transferring the image data from the aerial drone to a storing medium remotely located from the drone.

By being configured to transfer image data from the aerial drone to a storing medium remotely located from the drone, the user does not have to download the images from the aerial drone after the flight. Further, the user may inspect the plurality of images captured without waiting for the entire flight to be finished.

Within the context of this invention, "real-time" should be understood that the image data is transferred directly after being captured by the imaging sensor. There may obviously be a slight time delay between capturing the image data and transmitting the image data.

In one embodiment, the image data may first be stored in an internal memory of the aerial drone or imaging sensor. The aerial drone or imaging sensor may establish connection with a storing medium during the flight to transfer the image data. The storing medium may be an external device that a user operates. The storing medium may be a remote server that receives the image data from the aerial drone. The storing medium may subsequently transfer the image data to another external device.

According to one embodiment, the radial distance between two consecutive spiral arcs may be adapted to the image capturing width and/or height, so that two radially aligned and radially consecutive images are captured without any radial gap.

By being configured to adapt the radial distance between two consecutive spiral arcs, the entirety of the area of interest may be imaged without lacking any feature and/or object within the area of interest.

The image capturing width and/or height may be altered by the imaging sensor. The imaging sensor on the aerial drone may form part of a camera system. The camera system may further comprise optical elements, such as a lens or system of lenses. The lens or system of lenses may gather the light and focus it to the imaging sensor. The system of lenses may be configured to change the magnification prior to capturing an image.

The aerial drone may maintain a fixed orientation to a particular direction, e.g. towards the North during the flight. The imaging sensor may thus maintain a fixed orientation corresponding to the orientation of the aerial drone as further discussed below.

The distance between two consecutive spiral arcs may be constant for the entirety of the spiral trajectory. The distance between two consecutive spiral arcs may be a value determined by a user. The imaging sensor may adapt the width and/or the height accordingly by changing a magnification of a system of lenses to capture two radially aligned and radially consecutive images without any radial gap.

According to one embodiment, a flying altitude may be calculated based on the area of interest to be imaged.

By being configured to have a flying altitude calculated based on the area of interest to be imaged, enough coverage may be ensured in a single flight. By increasing the flight height a larger area may be covered. Further, the image captured may cover an area of interest that is captured from an equal height regardless of the height differences in the terrain. This does not, necessarily, mean that a single image should cover the area of interest, but rather, that the chosen altitude enables gathering images that can be used for generating an integrated map of the area of interest.

The area of interest to be imaged may be retrieved from an external device.. The external device may calculate the dimensions of the area of interest to be imaged. The flying altitude may be calculated such as the aerial drone may capture the least amount of images to investigate the area of interest. The flying altitude may be calculated such as the aerial drone may fly the shortest time to image the area of interest.

According to one embodiment, the calculated flying altitude may be conducted by means of the imaging sensor or other sensor data in the aerial drone, and/or map height data of the area of interest to be photographed.

According to one embodiment, the plurality of images of the area of interest captured may contain GPS data.

By being configured to contain GPS data, the images may be easier to aggregate into a single flight photograph. Further, the location of a specific object in the area of interest may be disclosed to a user which may facilitate actions to be taken in the area of interest.

The GPS data may be added to each of the plurality of images after capturing each of the plurality of images. The GPS data may be added to each of the plurality of images after the entirety of the plurality of images is captured. The imaging sensor may have a built-in GPS. The instant GPS location of the imaging sensor when an image is captured may be added to the image. In the context of this invention, the word "instant GPS location" should be interpreted as the precise GPS location at the moment when the image is captured.

The aerial drone may have a built-in GPS. The GPS location of aerial drone may be added to a captured image.

According to one embodiment, the plurality of images of the area of interest captured may be aggregated into a single flight photograph of the area of interest.

By being configured to aggregate the plurality of images of the area of interest into a single flight photograph, a user may obtain an improved visualization of the area of interest, instead of having to inspect each of the plurality of images of the area of interest. This vastly saves time for a user, since less duplicate data needs to be investigated and a focus area of the area of interest may be easily investigated.

The plurality of images of the area of interest captured may contain GPS location data. The plurality of images may be sorted and/or arranged according to the GPS location data of each of the plurality of images. The plurality of images may be tiled according to the GPS location data to form the single flight photograph. The aggregation into a single flight photograph may preferably be conducted on a server located remotely from the aerial drone. It may in some embodiments be carried out on an external device such as a mobile device.

In some context, the single flight photograph may be called an integrated map, and is to be understood as a map generated from the plurality of images over the area of interest.

According to one embodiment, the single flight photograph may be annotated with a time stamp associated with the flight photograph.

By being configured to be annotated with a time stamp, a user may inspect a plurality of single flight photographs and detect changes over a certain time period. The time period may be dependent on the user case. E.g. in the user case of a forest inventory, it may be interesting for the user to compare the map relative last week, but also relative last year at this time of year.

The user may sort the plurality of single flight photographs according to the time stamp. The user may inspect changes in the area of interest.

Each of the plurality of images of the area of interest may have a time stamp. The time stamp may be the time when the image was captured. The time stamp annotated on the single flight photograph may be the time when the first image in the plurality of images aggregated into the single flight photograph was captured. The time stamp annotated on the single flight photograph may be the time when the last image in the plurality of images aggregated into the single flight photograph was captured. The time stamp annotated on the single flight photograph may be the average time of the first and last image in the plurality of images aggregated into the single flight photograph were captured.

According to one embodiment, objects of interest may be identified in the single flight photograph.

By being configured to identify objects of interest in the single flight photograph, the user may define adequate objects of interest to be identified in the single flight photograph. The objects of interest may be varying with the application in which the system is used. One user case is inspection of a forest. The inspection of the forest may be performed with the intent to identify dying trees, fallen trees, piles or pits, stacks of harvested material such as trees or other changes in the forest. The identification of the objects of interests may be conducted on a server located remotely from the aerial drone. It may in some embodiments be carried out on an external device such as a mobile device.

Generally, the area of interest may span large areas. E.g. a forest may be of an area 10 hectares or larger.

Covering large areas and manually inspecting trees in a forest may be cumbersome and time consuming. Thus, the time needed to carry out the inspection may be reduced compared to a manual inspection wherein the user has to walk or drive in the forest.

The single flight photograph may be inspected, and the objects of interest may be identified, such as a fallen tree, a tree that has changed color which is likely due to an insect infestation, or a newly planted tree.

The objects of interest may be configured to contain GPS data. By being configured to contain GPS data, the user may easily reach the destination of the objects of interest.

According to one embodiment, the return flight may be initiated when a battery state-of-charge reaches a predetermined value.

By being configured to initiate the return flight when a battery state-of-charge value is reached, the aerial drone may reach the starting position before the battery is depleted.

The return flight may be initiated once the aerial drone completes the spiral trajectory. The aerial drone comprises a battery. The predetermined value of the battery state-of-charge may be a fixed value given as input by a user. The predetermined value of the battery state-of-charge may be calculated based on the distance between the end point of the spiral trajectory and the starting position.

According to one embodiment, the control of the aerial drone along the calculated spiral trajectory may be conducted in a mobile device.

By being configured to have a mobile device to control the aerial drone along the calculated spiral trajectory may enable a user to automate the operation of the aerial drone. The automated operation may be initiated at a distance. Thus, the mobile device facilitates the operation so that the user does not need to be present for navigating the aerial drone. In some embodiments the mobile device may circumvent the necessity for the user to be present at the starting position to turn on and navigate the aerial drone.

According to one embodiment, the detection of an object of interest may be made on the mobile device during the flight.

According to a second aspect, a method for flying an aerial drone for capturing image data is provided. The method comprises: retrieving an area of interest to be imaged; calculating a spiral trajectory within the area of interest; initiating an aerial drone flight from a starting position and radially outwards to an outer most portion of the calculated spiral trajectory so as to fly the shortest distance from the starting position to the outer most portion; controlling the aerial drone along the spiral trajectory so that the aerial drone flies with a continuous curved flight trajectory; capturing a plurality of images of the area of interest using an imaging sensor on the aerial drone along the spiral trajectory; and ending the flight session once the aerial drone has reached the calculated spiral trajectory.

This aspect may generally present the same or corresponding advantages as the former aspect. One further advantage with this is that when the capturing of images is close to done, the aerial drone will be in the center of the spiral and therefore being close to the starting point. Further, the first straight flying direction may be chosen dependent on the wind, to optimize flight efficiency.

In one embodiment, the first straight flight is chosen so that the aerial drone flies with the wind towards the start of the spiral trajectory. The wind direction may be determined by sensors, by drifting detection or by weather forecasts or a weather station.

According to a third aspect, an aerial drone system for imaging an area of interest is provided. The aerial drone system comprises: an aerial drone comprising an imaging sensor; a charging station configured to charge the aerial drone; a mobile device configured to control the aerial drone; wherein the aerial drone is configured to be initialized from a starting position to fly along the spiral trajectory, capture a plurality of images of the area of interest using the imaging sensor on the aerial drone, and fly radially inwards back towards the starting position.

Any of the features described in relation to the method, may be implemented in the system. This includes both functional features, like detecting specific objects of interest or analytical step, and structural features, like what type of image sensors or sizes of the drone that is used.

### Brief description of the drawings

The aspects of the present inventive concept, including its particular features and advantages, will be readily understood from the following detailed description and the accompanying drawings, in which:
Figure 1 is an overview illustration of a complete off-grid aerial drone station according to one embodiment.
Figure 2 illustrates a back view of the charging station according to one embodiment.
Figure 3 illustrates a frontal inside view of the charging station according to one embodiment.
Figure 4a illustrates a first integrated map with a first time stamp.
Figure 4b illustrates a second integrated map with a second time stamp.
Figure 4c illustrates the operation of the application to visualize the evolution of the area of interest.
Figure 5 illustrates the schematic of the method steps for flying an aerial drone for capturing image data according to one embodiment.
Figure 6 illustrates the action of capturing the plurality of images of the area of interest to aggregate the single flight photograph according to one embodiment.
Figure 7 illustrates the action of capturing the plurality of images of the area of interest to aggregate the single flight photograph according to one embodiment.
Figure 8 illustrates the schematic of the method steps for flying an aerial drone for capturing image data according to a second embodiment.
Figure 9 illustrates the action of capturing the plurality of images of the area of interest to aggregate the single flight photograph according to one embodiment.

### Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

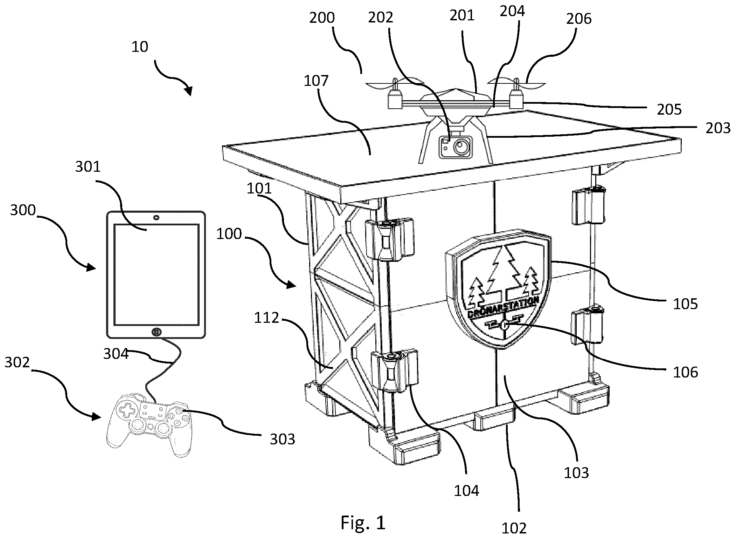

An off-grid aerial drone system 10 and a method for flying the aerial drone will be described in the following with reference to Fig. 1 - 9.

For clarity reasons, whenever a component comprises a plurality of parts, only one of them will be denoted with a reference number.

To start with, an aerial drone system will be described in relation to Figures 1-4c. This is a system which may be used for carrying out the method according to the claims of this invention. Thereafter, the specifics of the method steps will be discussed in more detail.

Figure 1 is an overview illustration of the complete off-grid aerial drone system 10 according to one embodiment. The off-grid aerial drone system 10 is an easily carriable system, that can be placed remotely without a power grid access and be operated with self-sustainable energy in the area of interest.

The off-grid aerial drone system 10 comprises a charging station 100, a aerial drone 200, and a mobile device 300.

The off-grid aerial drone system 100 is configured for the visual inspection of an area of interest 20. Although most examples given herein are in relation to a user case in the forest, the area of interest 20 in the scope of this invention is not limited to a forest application. In the context of this invention, the area of interest 20 may be, e.g. a forest, construction sites, excavation sites, a shoreline or a dock, as discussed above. The off-grid aerial drone system 10 may be configured to be located within the perimeter of the area of interest 20.

The charging station 100 embodiment shown in Figure 1 is a cuboid. It will be apparent to the person skilled in the art that this embodiment is one of many possible embodiments to construct the charging station.

All plastic components of the charging station 100 described below may be manufactured by 3D printing. This includes also components likes screws and hinges. The material used to manufacture the plurality of rectangular wall elements 101 may be a plastic material, in the illustrated example a recycled compound based on Glycol modified Polyethylene Terephthalate Glycol (PET-G) flame retardant UL94 V-0 class was used.

The charging station 100 comprises a plurality of rectangular wall elements 101. The rectangular wall elements 101 may be manufactured with an X-shaped forming beam 112 that crosses at the center of a rectangular wall element 101 and extends to the edges of the rectangular wall element 101.

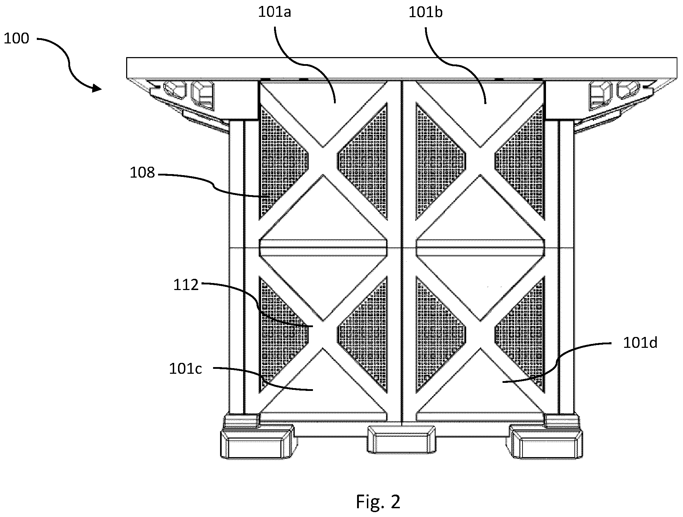

The X-shaped forming beam 112 may improve the stability of the rectangular wall element 101 as it may distribute the force more evenly inside the rectangular wall element 101. The X-shaped forming beam 112 may reduce the weight of the rectangular wall element 101 as less material may be needed to build a stable and durable rectangular wall element 101. The rectangular wall elements 101 may be configured to engage with an adjacent rectangular wall element to lock the rectangular wall elements 101 together along the sides facing each other of the rectangular wall elements 101 and thereby form the walls of the charging station 100. As best seen in fig. 2, this may e.g. be achieved by connecting the first wall element 101a to a second wall element 101b places to the right side of the first wall element, and being connected along the adjacent vertical sides. Further, the first wall element 101a is connected to a third wall element 101c placed below of the first wall element along the adjacent horizontal sides of the first and third wall elements 101a, 101c.

The charging station 100 comprises a plurality of legs 102 attached to the bottom and/or side portion of the charging station 100. The legs 102 may facilitate the placement of the charging station in different terrains. The legs may be extendable or adjustable to provide a stable set up in an uneven terrain.

The front side of the charging station 100 comprises two doors, wherein each door is connected to the frame of the charging station 100 by hinges 104. The hinges allow for opening the doors in an outwards manner. The hinges may be fastened with bolts or screws.

In the illustrated example, a protruding rigid body 105 is arranged marked with the company logo and name, which functions as a locking device for locking the doors in closed position.

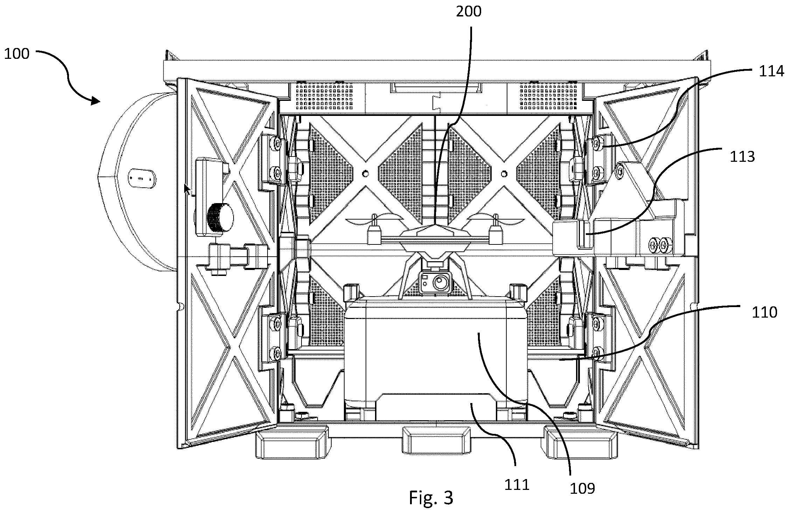

As may be observed in the latter Figure 3 which illustrates the charging station 100 in an open configuration, the protruding rigid body 105 is fixed to one of the doors. The protrusion 105 comprises a keyhole 106. The keyhole 106 may be coupled to a locking and/or unlocking mechanism. The keyhole 106 when in an unlocked position may enable opening the doors 103 and access the inside of the charging station 100.

The top side 107 of the charging station may act as a roof. The top side 107 of the charging station 100 may be a solar cell as is the case in the illustrated example. In such an embodiment the solar cell on the top side 107 of the charging station 100 may be configured to function as a starting platform and/or landing platform for the aerial drone 200.

Utilizing a solar cell as a roof reduces the cost of the charging station thanks to the dual use of the solar panel.

The aerial drone 200 may be a quadcopter drone. The aerial drone comprises a frame 201. The frame may be attached to four arms 204. The frontal view of the aerial drone 200 shown in Figure 1 depicts only two of the four arms attached to the main frame.

Further, the aerial drone comprises at least two legs 203 wherein the legs may be used to facilitate the landing of the aerial drone. Each of the arms 204 comprises a motor 205 distally attached with respect to the frame 201. The propelling blades 206 are attached at the top of the motors 205 to enable the flight of the aerial drone skywards. Embedded within the frame, the aerial drone further comprises a battery (not illustrated) in order to be operational.

The aerial drone 200 has attached to the frame 201 an imaging sensor 202. The imaging sensor 202 on the aerial drone 200 may form part of a camera system. The camera system may further comprise optical elements, such as a lens or system of lenses. The lens or system of lenses may gather the light and focus the light to the imaging sensor 202. The system of lenses may be configured to change the magnification and capture higher magnification images.

The operation of the aerial drone 200 may be fully controlled and automated by a mobile device 300. The mobile device 300 may have a display 301. The display 301 may allow the user to navigate between different applications installed on the operating system of the mobile device 300. From the mobile device 300 the user may set parameters to automate the flight of the aerial drone 200. The display 301 may be a touch sensitive display.

The off-grid aerial drone system 10 may further comprise a hand-held controller 302 configured to interact with the mobile device 300 and communicate with the aerial drone 200.

The hand-held controller 302 may be connected to the mobile device via a physical cord 304. The hand-held controller may be connected to the mobile device via Wi-Fi or Bluetooth^{®}. The possibility to communicate with a cordless connection facilitates the operation of the aerial drone 200 wherein a user may control the aerial drone 200 with the aid of the hand-held controller 302 at a distance.

The hand-held controller may comprise a plurality of buttons 303. The plurality of buttons 303 may be configured to have different functionalities related to a manual control of the drone. The plurality of buttons 303 may be pressed in order to allow manually operating the aerial drone 200 and/or the mobile device 300 through the hand-held controller. The mobile device may emulate the control signal to the hand-held controller which can transmit the emulated control signal to the lightweight aerial drone.

Figure 2 illustrates a back view of the charging station 100 according to one embodiment. The back side comprises at least four rectangular wall elements 101a-101d locked together, as discussed above. In comparison to the rectangular wall elements 101 located on the right and/or left side of the charging station 100, the rectangular wall elements 101 of the back side is illustrated to further comprise ventilated portions 108. The X-forming beam 112 shape is the same as the other wall elements and divides the rectangular wall element 101 into four triangular components. Two of the triangular components may constitute the ventilated potions. Also these portions may be 3D printed. The openings in the ventilated portion 108 may serve to provide ventilation to the charging station 100. However, in some areas of interest, e.g. the charging station 100 may be situated in a forest, the charging station 100 may be exposed to an environment where e.g. bugs want to enter inside the charging station. This may be mitigated by building the mesh in an appropriate size, e.g. holes that are less than 5mm, less than 3mm or less than 1 mm each. This will both allow ventilation and prohibit insects from entering the charging station.

Figure 3 illustrates a frontal inside view of the charging station 100 according to one embodiment. In this frontal inside view the doors 103 are in an open configuration. The battery 109 of the charging station 100 may be positioned on top of the bottom side portion of the charging station 100. The battery may be locked in position by at least 2 side elements 100 spaced at a distance apart as to provide sufficient room for the battery 109 to be accommodated.

There may be a protruding element 111 configured to hold the battery in position on the front side of the battery. This may be of advantage when e.g. moving the charging station. The inner side of the door 103 may comprise a holding element 113 configured to store the mobile device 300 and/or the optional hand-held controller 302 during the periods when the off-grid aerial drone system 10 is not in operation.

The top side of the battery 109 may serve as a rack to store the aerial drone 200.

The hinges 104 are fastened on the doors 103 and the rectangular wall elements 101 by bolts 114.

The user may store inside the charging station 100 the aerial drone 102. The user may further store the mobile device 110.

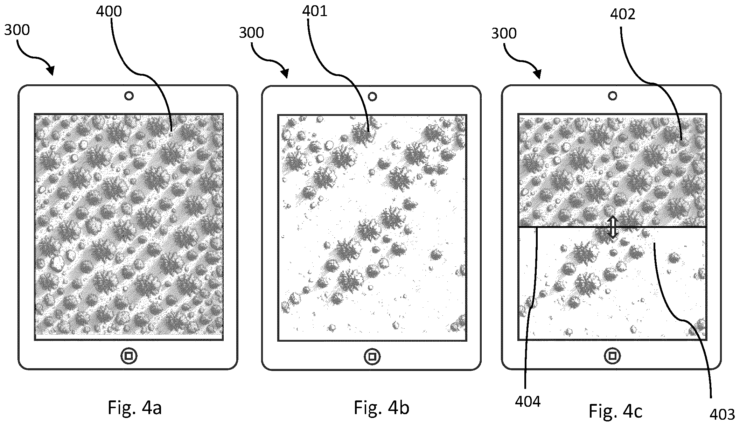

Figure 4a illustrates a first integrated map 400 with a first time stamp. The first integrated map 400 is displayed within an application in the mobile device 300. The user may interact with the first integrated map 400 such as to zoom-in to at least one object of interest, or zoom-out to get a full overview of the integrated map.

Figure 4b illustrates a second integrated map with a second time stamp. The second integrated map 401 is displayed within the application in the mobile device 300. The user may interact with the second integrated map 401 such as to zoom-in to at least one object of interest, or zoom-out to get a full overview of the integrated map.

Figure 4c illustrates the operation of the application to visualize the evolution of the area of interest 20.

A first portion 402 of the first integrated map with the first associated time stamp and a second portion 403 of the second integrated map with the second associated time stamp may be displayed simultaneously on the display 301 of the mobile device 300 within the application.

The application may be configured to have a slider 404 that divides the two integrated maps of different time stamps, when it displays two integrated maps. The slider 404 may be configured to change the size of the respective portions of the displayed integrated maps. The user may touch and slide the slider 404 along a predefined direction to assess the time evolution of the at least one object of interest. This may allow an easy comparison of the area of interest and changes that has occurred between the dates of the image captures.

By sliding the slider 404 fully to one side the application may display on the full screen the integrated map with the first or second associated time stamp.

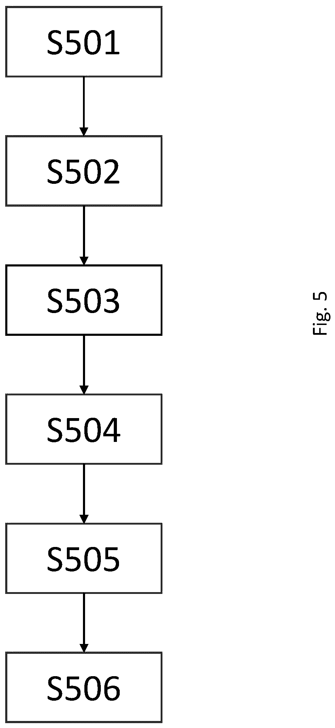

Figure 5 illustrates the schematic of the method steps for flying an aerial drone 200 for capturing image data of an area of interest 20.

The method comprises the steps of retrieving S501 an area of interest 20 to be imaged, calculating S502 a spiral trajectory 601, 701 within the area of interest 20, initiating S503 the aerial drone 200 flight along the spiral trajectory 601, 701 from a starting position 603, 703 being inside said calculated spiral trajectory 601, 701, controlling S504 the aerial drone 200 along the spiral trajectory 601, 701 so that the aerial drone 200 flies with a continuous curved flight trajectory, capturing S505 a plurality of images 602, 702 of the area of interest 20 using an imaging sensor 202 on the aerial drone 200 along the spiral trajectory 601, 701, initiating S506 a return flight to the starting position 603, 703 by flying radially inwards 604, 704 to the starting position 603, 703, so as to fly the shortest distance to the starting position 603, 703 when initiating the return flight.

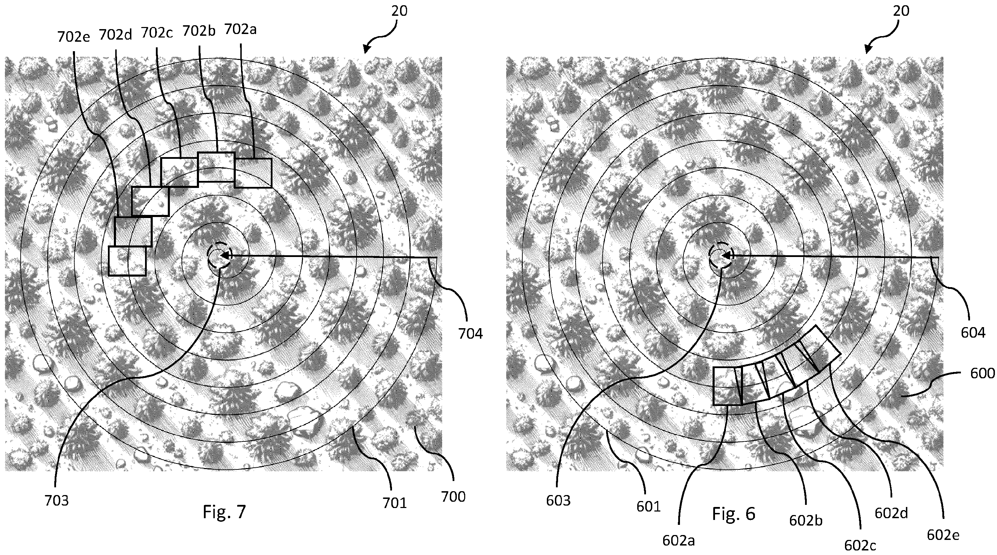

The steps of the method in Figure 5 may be better understood in conjunction with Figure 6 and 7. These two figures illustrates to similar embodiments, with the difference being in what orientation the aerial drone 200 has during the flight trajectory. In Figure 6, the orientation of the aerial drone 200 is such that the front of the aerial drone 200 faces towards the tangent of the current position along the spiral. This puts the left side of the aerial drone 200 oriented towards the center of the area of interest 20. In Figure 7, the orientation of the aerial drone 200 is such that the front of the aerial drone 200 the flight is maintained fixed to a particular direction during the movement around the spiral.

Figure 6 and 7 illustrate the action of capturing a plurality of images 602, 702 of the area of interest 20 while the aerial drone 200 follows a spiral trajectory 601, 701 to image the area of interest 20. The exemplary of the area of interest 20 shown in Figure 6 and 7 is not to be considered limiting and is thus only one of the possible areas of interest within the scope of this invention.

The aerial drone 200 initiates the flight within a starting position 603, 703. In this position there may be an off-grid aerial drone system 10 placed, from which the aerial drone 200 will lift and land.

The aerial drone 200 may receive information such as the size and/or location of the area of interest 20, and/or the spiral trajectory 601, 701 to be, flown from an external device before takeoff.

The information pertaining to the area of interest 20 may be transmitted to the aerial drone 200 in the form of an orthographic map 600. This may be conducted during the flight, to avoid manual handling of e.g. memory cards on the drone.

The orthographic map 600, 700 may be subsequently populated with images 602a-602e, or 702a-702e to span the entirety of objects located within the area of interest 20.

Please note that due to clarity reasons, not all images are illustrated in this image. Only a number of images are illustrated to show the concept of the capturing. In a functioning system, the number of images may be vastly increased, up to a video stream with many figures per second (20, 40, 60, 100 or even 200) being captured and sent.

In the case where a hand-held controller 302 is used, it is possible that the drone is controlled with momentary control signals without the aerial drone 200 having information about the route. Instead, the information about route may be kept on the mobile device 300 or other device, and the aerial drone 200 may merely fly according to the controlled path.

After the aerial drone 200 reaches the flying altitude, the aerial drone 200 initiates flying along the spiral trajectory 601, 701. Throughout the spiral trajectory 601, 701 a plurality of images 602a-602e 702a-702e may be captured. The frequency of images may be such that no discontinuity is formed between two consecutive images 602, 702 when mapping the area of interest 20 as illustrated in Figure 6 and 7.

As mentioned above, in the shown embodiment in Figure 6 the orientation of the aerial drone 200 is such that the front of the aerial drone 200 faces towards the tangent of the current position along the spiral trajectory 601, 701. This puts the left side of the drone oriented towards the center of the area of interest 20. The center of the area of interest may correspond to the starting position 603, 703 of the spiral trajectory 601, 701. The aerial drone 200 may maintain such orientation by changing the value of the yaw when the aerial drone 200 takes a turn.

Further, in the illustrated embodiment of Figure 7, the orientation of the aerial drone 200 is such that the front of the aerial drone 200 the flight is maintained fixed to a particular direction, e.g. towards North. In this instance, the yaw of the aerial drone 200 remains constant during the flight. In this embodiment, the width and/or height of the plurality of images 702 may be altered on an individual image level to avoid gaps between two consecutive images.

It may occur that two consecutive images have overlapping portions. The overlapping portions may be merged together during the post-processing of the images within the external device to form a single flight photograph. The plurality of images 602, 702 captured may be to such extent as to cover the full area of interest 20.

In one embodiment the number of plurality of images is more than 10 per minute, or more than 10 per second. In such embodiment there will be a substantial amount of overlap, which may facilitate the operation to aggregate the images to a single integrated map. In one embodiment, the plurality of images 602, 702 is captured from a video stream.

After the aerial drone 200 reaches the ending point of the spiral trajectory 601, 701, it initiates the return to the starting point 603, 703 by flying radially inwards to the starting position along the straight path 604, 704.

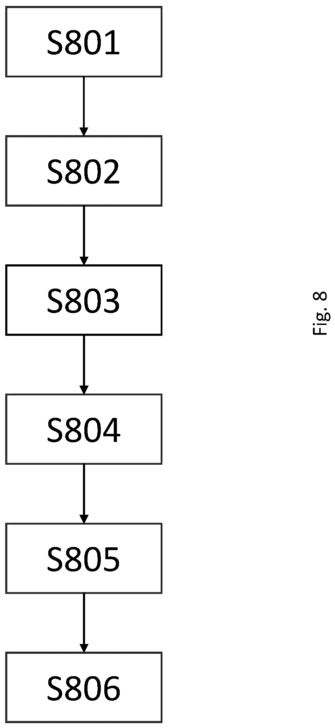

Figure 8 illustrates the schematic of the method steps for flying an aerial drone 200 for capturing image data of an area of interest 20.

The method comprises the steps of retrieving S801 an area of interest 20 to be imaged, calculating S802 a spiral trajectory 901 within the area of interest 20, initiating S803 the aerial drone 200 flight along the spiral trajectory 901 from a starting position 903 and radially outwards 904 to an outer most portion of the calculated spiral trajectory so as to fly the shortest distance from the starting position 903 to the outer most portion, controlling S804 the aerial drone 200 along the spiral trajectory 901 so that the aerial drone 200 flies with a continuous curved flight trajectory, capturing S805 a plurality of images 902 of the area of interest 20 using an imaging sensor 202 on the aerial drone 200 along the spiral trajectory 901 , ending S806 the flight session once the aerial drone 200 has reached the center of the calculated spiral trajectory 901.

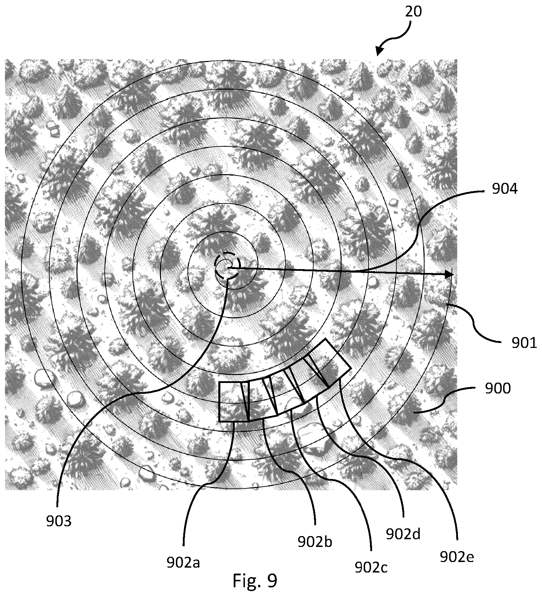

The steps of the method in Figure 8 may be better understood in conjunction with Figure 9.

Figure 9 illustrates the action of capturing a plurality of images of the area of interest 20 while the aerial drone 200 follows a spiral trajectory 901 to image the area of interest 20. The exemplary of the area of interest 20 shown in Figure 9 is not to be considered limiting and is thus only one of the possible areas of interest within the scope of this invention. The aerial drone 200 initiates the flight within a starting position 903. After the aerial drone 200 reaches the flying altitude, the aerial drone 200 initiates a flight from the starting point 903 by flying radially outwards to an outer most portion of the calculated spiral trajectory 901 along the straight path 904.

In large, the illustrated example of Figure 9 corresponds to what is disclosed in Figure 6. However, instead of starting with the spiral trajectory 601, 701 and ending with the straight flight 604, 704, the aerial drone 200 starts with a straight flight path 904 outwards before flying in the spiral trajectory 901. The aerial drone 200 terminates the flight once it reaches the starting position 903.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A method for flying an aerial drone (200) for capturing image data, the method comprising:
retrieving (S501) an area of interest (20) to be imaged;
calculating (S502) a spiral trajectory (601, 701) within the area of interest (20);
initiating (S503) the aerial drone (200) flight along the spiral trajectory (601, 701) from a starting position (603, 703) being inside said calculated spiral trajectory (601, 701);
controlling (S504) the aerial drone (200) along the spiral trajectory (601, 701) so that the aerial drone (200) flies with a continuous curved flight trajectory;
capturing (S505) a plurality of images (602, 702) of the area of interest (20) using an imaging sensor (202) on the aerial drone (200) along the spiral trajectory (601, 701);
initiating (S506) a return flight to the starting position (603, 703) by flying radially inwards (604, 704) to the starting position (603, 703), so as to fly the shortest distance to the starting position (603, 703) when initiating the return flight.

2. The method according to claim 1 further comprising, in real-time during the flight, transferring the image data from the aerial drone (200) to a storing medium remotely located from the aerial drone (200).

3. The method according to claim 1 or 2, wherein the radial distance between two consecutive spiral arcs is adapted to the image capturing width and/or height, so that two radially aligned and radially consecutive images are captured without any radial gap.

4. The method according to any of the previous claims, wherein a flying altitude is calculated based on the area of interest (20) to be imaged.

5. The method according to claim 4, wherein the calculated flying altitude is conducted by means of the imaging sensor (202) or other sensor data in the aerial drone (200), and/or map height data of the area of interest (20) to be photographed.

6. The method according to any of the previous claims, wherein the plurality of images (602, 702) of the area of interest (20) captured contains GPS data.

7. The method according to any of the previous claims, wherein the plurality of images (602, 702) of the area of interest (20) captured are aggregated into a single flight photograph of the area of interest 20.

8. The method according to claim 7, wherein the single flight photograph is annotated with a time stamp associated with the flight photograph.

9. The method according to any of the previous claims, wherein the return flight is initiated when a battery state-of-charge reaches a predetermined value.

10. The method according to any of the previous claims, wherein the control of the aerial drone (20) along the calculated spiral trajectory (601, 701) is conducted in a mobile device (300).

11. The method according to any one of the previous claims, wherein the control of the aerial drone (200) along the calculated spiral trajectory (601, 701) is conducted with the aerial drone 200 in a constant compass direction orientation.

12. The method according to any one of claims 1-10, wherein the control of the aerial drone (200) along the calculated spiral trajectory (601, 701) is conducted with the aerial drone (200) always oriented to fly with a short side of the plurality of images captured facing the center of the spiral.

13. The method according to claim 10, wherein the detection of an object of interest is made on the mobile device (300) during the flight.

14. A method for flying an aerial drone for capturing image data, the method comprising:
Retrieving (S801) an area of interest (20) to be imaged;
Calculating (S802) a spiral trajectory (901) within the area of interest (20);
initiating (S803) an aerial drone flight (200) from a starting position (903) and radially outwards (904) to an outer most portion of the calculated spiral trajectory so as to fly the shortest distance from the starting position (903) to the outer most portion;
controlling (S804) the aerial drone (200) along the spiral trajectory (901) so that the aerial drone (200) flies with a continuous curved flight trajectory;
capturing (S805) a plurality of images (902) of the area of interest (20) using an imaging sensor (202) on the aerial drone (200) along the spiral trajectory (901); and
ending (S806) the flight session once the aerial drone (200) has reached the center of the calculated spiral trajectory (901).

15. An off-grid aerial drone system (10) for imaging an area of interest (20), the aerial drone system (10) comprising:
an aerial drone (200) comprising an imaging sensor (202);
a charging station (100) comprising a battery (109) configured to charge the aerial drone (200);
a mobile device (300) configured to control the aerial drone (200);
wherein the aerial drone (200) is configured to be initialized from a starting position to fly along the spiral trajectory, capture a plurality of images of the area of interest using the imaging sensor on the aerial drone, and fly radially inwards back towards the starting position.
